# EUROPEAN PATENT APPLICATION

(11) **EP 2 178 038 A1**
(43) Date of publication of application: **21.04.2010**
(21) Application number: 08305465.0
(22) Date of filing: 12.08.2008
(51) Int. Cl.: G06Q 10/00, H04L 12/56

(54) **Method and device for managing information of social type and for opportunistic forwarding**

(71) Applicant: Thomson Licensing, 92443 Issy-les-Moulineaux Cedex (FR)
(72) Inventor: Chaintreau, Augustin, 75006, Paris (FR); Mtibaa, Abderrahmen, 75015, Paris (FR); Diot, Christophe, 75005, Paris (FR)
(74) Representative: Ruellan-Lemonnier, Brigitte

(57) **Abstract**

The invention concerns a method of communication in a communication network, using a communication device (D) comprising means for exchanging data with at least another communication device, **characterized in that** it comprises the following steps:
• receiving, at said device (D) :
i. information (I) representing interconnections between users of a social networking application ;
ii. information concerning at least one contact between said device (D) and at least another device, occurring in said communication network ;

• determining, upon occurrence of a new contact (NC) between said device (D) and at least another device, based :
■ on said information (I) representing interconnections between users of a social networking application and
■ on predetermined rules related to data forwarding;

to transmit data or not to transmit data from said device (D) using said new contact (NC).

## Description

### FIELD OF THE INVENTION

The present invention pertains to the field of communication networks.
The present invention more particularly relates to a method and a device for managing information of social type and for opportunistic forwarding.

### BACKGROUND OF THE INVENTION

The Internet, defined as a worldwide, publicly accessible series of interconnected computer networks that transmit data by packet switching using the standard Internet Protocol (IP), added multiple social interaction techniques not based on physical meeting: email, chat, and Online Social Network applications, that create a virtual space where users can build their social network independently of where they are located, and allow these social networks (or communities) to interact freely using a large set of Internet / World Wide Web applications. However, when people with similar interests or common acquaintances get close to each others in streets or conferences, they have no automated way to identify this potential "relationship".

Opportunistic forwarding relies on mobile users transporting content on their devices for other users to communicate. One challenge in this context is to decide in the absence of global information if another mobile user met opportunistically should receive the content currently stored by a node. Most forwarding algorithms making this decision are node oblivious (they choose when to transfer data based on a local counter), hence they fail to adapt to the current condition.

Opportunistic forwarding has notably been discussed in the scientific publication: *"*Impact of Human Mobility on the Design of Opportunistic Forwarding Algorithms" (Augustin Chaintreau, Pan Hui, Jon Crowcroft, Christophe Diot, Richard Gass, and James Scott), IEEE Infocom 2006.

Properties of paths built over time in a quickly varying graph is a relative new topic, that has for instance been discussed in the three following publications:
■ C. Tantipathananandh, T. Berger-Wolf, and D. Kempe. "A framework for community identification in dynamic social nets." In Proc. of ACM KDD, 2007;
■ A. Chaintreau, A. Mtibaa, L. Massoulié, and C. Diot. "The diameter of opportunistic mobile networks." In Proc. of ACM CoNext, 2007 ; and
■ A. Miklas, K. Gollu, K. Chan, S. Saroiu, P. Gummadi, and E. de Lara. « Exploiting social interactions in mobile systems." In Proc. of Ubicomp, 2007.

Prior research work has considered the problem of designing opportunistic forwarding schemes that are aware of social properties, for instance in the two following publications:
■ E. M. Daly and M. Haahr "Social network analysis for routing in disconnected delay-tolerant MANETs." In Proc. of ACM MobiHoc, 2007; and
■ P. Hui, J. Crowcroft, and E. Yoneki. "Bubble rap: Social-based forwarding in delay tolerant networks." in Proc. of ACM MobiHoc, 2008.

The solutions disclosed in these two publications present the following drawbacks:
■ they are difficult to compute in real time and in a distributed way: they notably cause additional delay, additional energy consumption and overhead ;
■ their semantic is not defined by the users; and
■ they can be used in some types of networks only and cannot be generalized to any kind of communication network.

The US patent application No. 2006/0015588 *"Partitioning social networks"* (Microsoft) is also known in the prior art. The system described in this prior US patent application has a node identification component to identify multiple nodes associated with a social network that is managed by multiple servers. A clustering component is connected to the node identification component to aggregate subsets of nodes associated with a respective social network. The clustering component dedicates or designates a server to the respective subsets of the nodes. The aim of the solution disclosed in this prior US patent application is to solve a problem of choice of server for a social networking application deployed on a network, notably in order to avoid congestions.

The prior publication *"*Knowledge-based opportunistic forwarding in vehicular wireless ad hoc networks" (LeBrun J, Chen-Nee Chuah, Ghosal D and Zhang M - 2005 IEEE 61st Vehicular Technology Conference. VTC2005- Spring) discloses a forwarding algorithm, which uses velocity information to make intelligent opportunistic forwarding decisions. This publication does not disclose any functionality related to social profiles.

The publication by Christophe Diot "Packet forwarding in pocket switched networks - An empirical characterization of human mobility" (Published in: Sustainable Internet. Proceedings of the Third Asian Internet Engineering Conference, AINTEC 2007) gives a presentation of the technical field, as well as some early key results and related challenges, but does not propose any new forwarding protocol.

### SUMMARY OF THE INVENTION

The present invention aims at solving the above-mentioned drawbacks that are present in the solutions of the prior art.

The technical problem the present invention seeks to solve is the following: how to transmit data from a communication device to another communication device in a wireless communication network, in a way that minimizes transmission delays and is less costly in terms of number of transmissions?

The reduction of the number of transmissions leads to a reduction of computing overhead, of packet overhead and of the bandwidth that is used, and also to a reduction in terms of energy (power / battery consumption).

The present invention concerns, in its broader sense, a method of communication in a communication network, using a communication device (D) comprising means for exchanging data with at least another communication device, **characterized in that** it comprises the following steps:
■ receiving, at said device (D):
   i. information (I) representing interconnections between users of a social networking application ;
   ii. information concerning at least one contact between said device (D) and at least another device, occurring in said communication network ;
• determining, upon occurrence of a new contact (NC) between said device (D) and at least another device, based :
   ■ on said information (I) representing interconnections between users of a social networking application and
   ■ on predetermined rules related to data forwarding;
   to transmit data or not to transmit data from said device (D) using said new contact (NC).

Preferably, said method further comprises a step of transmitting data from said device (D) using said new contact (NC).

Advantageously, said method further comprises a step of receiving, at said device (D), information concerning predetermined rules related to data forwarding.

According to an embodiment, information concerning predetermined rules related to data forwarding is stored in a memory of said device (D).

Preferably, said method further comprises a step of receiving, at said device (D), information concerning statistics about past contacts between devices.

According to a variant, said statistics about past contacts between devices include the last time a given device has been in contact with another given device.

According to an embodiment, said statistics about past contacts between devices include average frequencies of contact between given devices.

According to a variant, said predetermined rules related to data forwarding are composed of several rules using Boolean operators.

Preferably, said information (I) representing interconnections between users of a social networking application has the form of a graph (G).

Advantageously, depending on a source device (s) and a destination device (d), a rule defines a subset of directed pairs of devices ((u) -> (v)) so that contacts occurring for pairs in said subset only are allowed in forwarding path.

According to an embodiment, said pair of devices ((u) -> (v)) is allowed if and only if device (u) and device (v) are within a predetermined distance (k) in the graph (G).

Preferably, said pair of devices ((u) -> (v)) is allowed if and only if said device (v) is within a predetermined distance (k) of destination device (d) in the graph (G).

According to an embodiment, said pair of devices ((u) -> (v)) is allowed if and only Centrality(u) ≤ Centrality(v), the Centrality function measuring the importance of a device (Dc) in the network.

Preferably, the Centrality function depends on:
•the occurrence of this device (Dc) in shortest paths connecting pairs of other devices ; and/or
•the mean distance between this device (Dc) and all others devices.

According to a variant, said pair of devices ((u) -> (v)) is allowed if and only the distance from device (v) to destination device (d) in said graph (G) is not bigger than the distance from device (u) to destination device (d) in said graph (G).

According to another embodiment, said pair of devices ((u) -> (v)) is allowed if and only Degree (u) ≤ Degree(v), the Degree function representing the number of directly connected devices (associated to users) for a given device in said graph (G).

In the context of the present invention, the notion of "degree" deals with the number of friends.

The present invention also concerns a communication device (D) comprising means for exchanging data with at least another communication device in a communication network, **characterized in that** it further comprises means for:
• receiving:
   i. information (I) representing interconnections between users of a social networking application ;
   ii. information concerning at least one contact between said device (D) and at least another device, occurring in said communication network ;
• determining, upon occurrence of a new contact (NC) between said device (D) and at least another device, based :
   ■ on said information (I) representing interconnections between users of a social networking application and
   ■ on predetermined rules related to data forwarding;
   to transmit data or not to transmit data from said device (D) using said new contact (NC).

The present invention makes the forwarding decision based on the social graph, preferably defined by users in a social networking application (for instance and not exclusively Facebook - Registered Trademark), as well in particular embodiments as other general measures of nodes connectivity.

The social contact manager receives:
- the forwarding rules set a priori by a standard or the user
- the current social graph, and, in a variant, statistics about nodes contacts (last time seen, average frequency) as gathered by the application
- the opportunistic contacts occurring with other nodes in the network

It works as follows: whenever a new contact occurs, the contact manager decides, based on policy rule set a priori, for which destinations this contact is valid (i.e. can be used for opportunistic forwarding). This is determined by comparing the pair of nodes met and if they belong to a subset of "allowed pair".

This is done by verifying if the current rule specified is satisfied by these opportunistic contacts. Note that the rule may be a composed of several rules using logical (Boolean) operator OR and AND.

Messages are then propagated by the node for all valid contacts.

In this context, some advantages provided by the present invention are as follows:
• The network can benefit from social information gathered by the application to optimize opportunistic forwarding, reducing power and bandwidth consumption in the nodes ;
• The user may interact with the social manager via the set of social rules that may be customized.

As opposed to individual forwarding algorithm, the user controls the nodes it communicates without the need to monitor their statistics and the current social graph.

The software, as built according to the principles of the present invention, can be implemented on Microsoft Windows Mobile smartphones, but also on mobile phones using the Symbian OS or might also be implemented on the Apple iPhone or any Linux-based or Unix-based operating system (Microsoft, Windows, Symbian, Apple and iPhone are registered Trademarks).

The software, as built according to the principles of the present invention, can also be implemented on PDAs (Personal Digital Assistants), laptop PCs, Access Points, Routers or Base Stations.

### BRIEF DESCRIPTION OF THE DRAWINGS

The following detailed description will be better understood with the drawings, in which:
• Figure 1 shows an example of device according to the present invention ;
• Figure 2 shows an overview of the architecture of the software, as built according to the principles of the present invention ;
• Figure 3 shows an example of logical components for performing the steps of the method according to the present invention ;
• Figure 4 represents the delay distribution for five rules related to data forwarding ; and
• Figure 5 illustrates a comparison of selectivity and normalized success ratio (measured at ten minutes and 1 hour).

### DETAILED DESCRIPTION

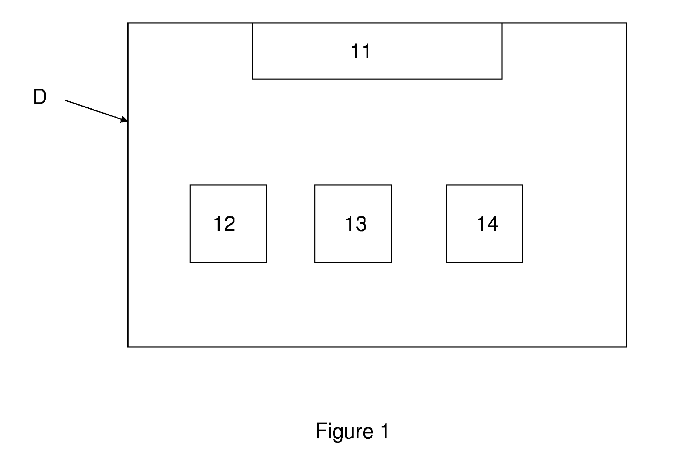

The communication device D shown on Figure 1 comprises a communication interface 11, a processor 12, a volatile memory 13 and a non-volatile memory 14.

The communication interface 11 could for instance be a Bluetooth interface.

The processor 12, the volatile memory 13 and the non-volatile memory 14 are used for storage and processing of/for the software components as built according to the principles of the present invention.

In the following, Bluetooth is used as networking protocol. It should be noted that any other Personal / Local area networking protocol could also be used, instead of Bluetooth.

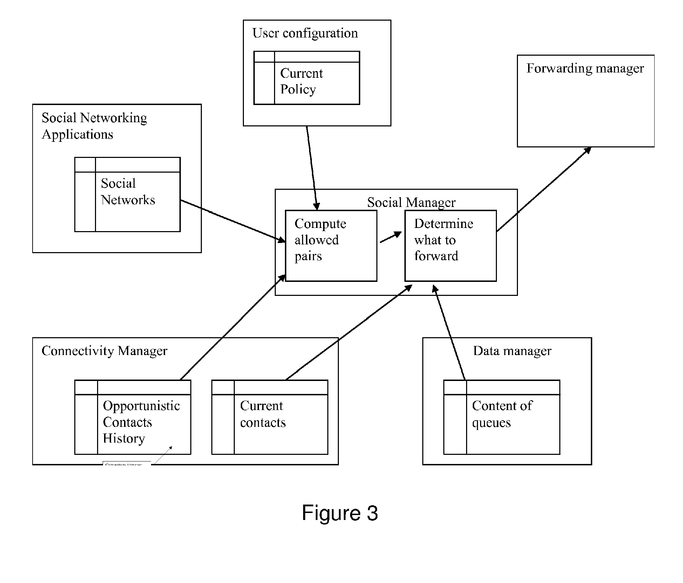

Figure 3 illustrates how, in an embodiment, the social manager interacts with other elements of an architecture for opportunistic communication.

In an embodiment, as shown on Figure 3, the "Social Manager" component receives:
• information from one or several social networking application(s) - this information is preferably under the form of a graph (G) representing interconnections between users of the social networking application(s) ;
• information related to these rules/policies concerning data forwarding - these rules or policies can for instance be set by users ;
• information, from another component: the "connectivity *manager",* this information concerns at least one contact between said device (D) and at least another device, occurring in the communication network, and also advantageously concerns statistics about past contacts between devices.

The "Social Manager" component can also use content of queues, from another component of the software architecture: *"the data manager".* These queues contain data to be forwarded

Two main functions are managed at the level of said "Social Manager" component:
i) Computing allowed pairs (determining which relays are authorized towards which destinations): this depends on the social network that is used (controlled by the application), on the contacts history (which can be a local information measured by the nodes, or an information that is shared between nodes), and on a policy, that can either be predetermined for the communication network or for at least a plurality of devices in the communication network, or determined by the source device.
ii) Determining what to forward: depending on the "filling" of "allowed pairs", on the current content of the queues, and on the current contacts, the social manager determines a set of information to forward.

Then, a "Forwarding Manager" will transmit data to other devices, based on decisions made by said "Social Manager".

For instance, a very basic example of use of the invention would be the following:
We consider four users/persons: Alpha, Beta, Gamma and Delta, each one carrying a communication device and all users using the same given social networking application.
User Alpha wishes to transmit a message to another person Beta.
Gamma and Delta are equally close to Alpha in the social networking application, and Delta is closer than Gamma to Beta in the social networking application.
Then, if Alpha gets in contact with Gamma and Delta, Alpha will prefer to forward the message to Delta than Gamma because the probability that Delta meets Beta before Gamma meets Beta is high (at least above 0,5), given the fact that Delta is closer than Gamma to Beta in the social network as defined by the networking application.

The inventors of the present invention have designed heuristic rules to construct efficient paths based on relationship in a social network.

The inventors of the present invention have studied the properties of delay-optimal paths in a temporal network. Such paths offer the best possible delivery ratio, but they can only be found a *posteriori,* or otherwise using flooding. The inventors of the present invention have obtained key results on the constructive properties of forwarding paths.

The construction rules considered by inventors of the present invention fit in the following general model: depending on a source s and a destination d, a rule defines a subset of directed pairs of nodes (u -> v) so that the contacts occurring for pairs in the subset only are allowed in forwarding path.

The following construction rules have been considered by the inventors of the present invention:
**Rule No. 1: neighbour**(k): (u -> v) is allowed if and only if u and v are within distance k in the social graph. This distance between two nodes/devices in the social graph can also be called "social distance".
   The *"social distance"* is defined as the distance between two nodes in the social graph: the social distance between two friends is equal to 1; the social distance between two friends of a common friend (friends of friends) is equal to 2; etc.
**Rule No. 2: destination-neighbour**(k): (u -> v) is allowed if and only if v is within distance k of d in the social graph (the distance considered here is the social distance).
**Rule No. 3: non-decreasing-centrality:** (u -> v) is allowed if and only if Centrality(u) ≤ Centrality(v).
   The *"Centrality"* function measures the importance of a node in the network. It deals with the occurrence of this node inside the shortest paths connecting pairs of other nodes or the mean distance between the node and all others nodes.
**Rule No. 4: non-increasing-distance:** (u -> v) is allowed if and only if the social distance from v to d is no more than the one from u to d.
**Rule No. 5: non-decreasing-degree:** (u -> v) is allowed if and only if Degree(u) ≤ Degree(v). The "Degree" function represents the number of directly connected friends/users in the social graph.

In the context of the present invention, it is assumed in addition that pairs (u -> d) are allowed for all u, as any opportunity to complete the path with a single hop should not be missed. The inventors of the present invention have considered other rules such as strictly-decreasing-distance.

Each above-mentioned rule defines a heuristic method to select among all the opportunistic contacts the ones that are crucial in order to connect source and destination quickly over time.

One aim of the present invention is to design a rule that reduces as much as possible the contacts used, while allowing quasi-optimal delay.

For comparison purposes, two measures for each rule have been introduced:
(1) its selectivity, which is measured by the fraction of the directed pairs (u -> v) that it allows, and
(2) its success ratio which is the probability that a path exists and follows this rule, with a maximum delay (e.g. ten minutes).

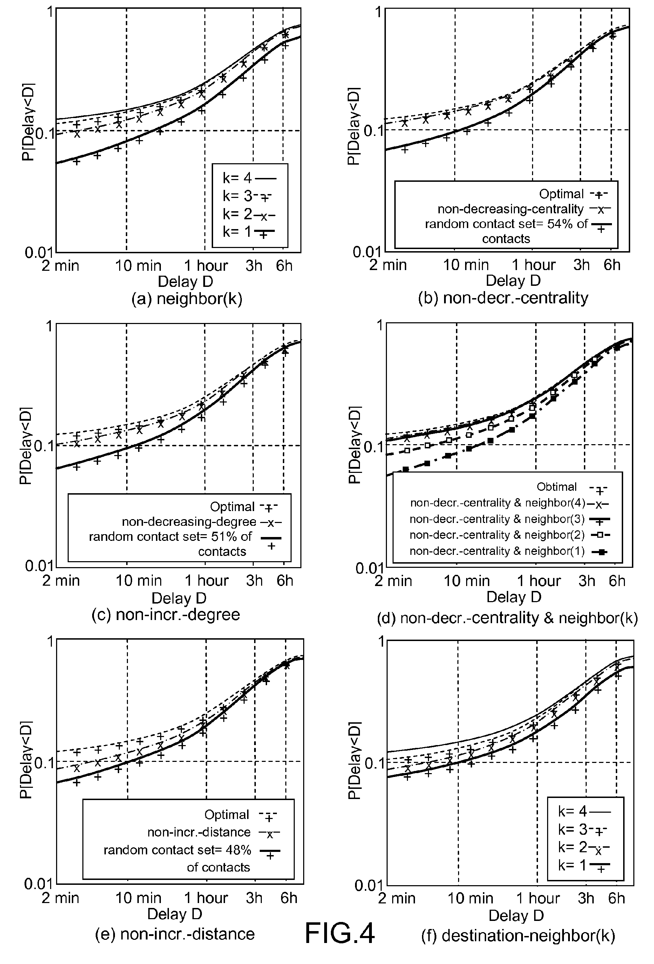

Typically, this success can be normalized by the success of flooding.
The results for a selected set of rules may be found in Figure 4, where the delay distribution for five rules is represented, as well as a combination of neighbour and centrality rules.

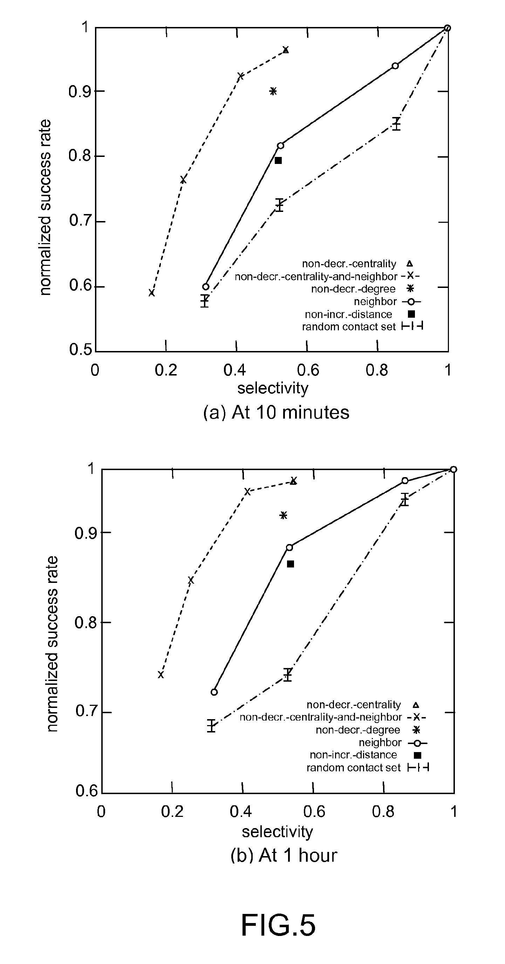

Figure 5 plots a comparison of selectivity and normalized success ratio (measured at ten minutes and 1 hour).

For comparison, the performance (delay or success ratio) obtained when selecting contacts randomly according to the same selectivity, has been presented in some of them.

The rules mentioned above have been tested. Several rules have also been combined together (defined by intersection) in order to study how they could complement each other.

The inventors of the present invention have observed that:
• The neighbour rule performs reasonably well in comparison with other rules, and significantly better than a random choice. This result is encouraging as people that are neighbors (e.g. friends, or friends of friends) are more likely to cooperate (and trust each other) in order to construct a path over time.
• The rule based on centrality outperforms all the rules that have been tested (reaching more than 95% of success with half of the pairs). It is better than the rule that uses the social distance to the destination for similar selectivity. This result is counterintuitive as the scheme based on distance depends on the destination, whereas non-decr.-centrality is destination unaware. Note that even the rule based on degree, which is even simpler, outperforms the one based on distance.
• A combination of neighbour and centrality rules naturally improves selectivity, offering more flexibility and achieves one of the best trade-offs.

In the context of a community event, the primary factor to decide whether a node is a good next hop is its centrality.

In addition, it seems that the best performance trade-off is obtained when several complementary rules are combined.

The "Social Manager" application is implemented on software architecture for a communication device.

The following software architecture is an example of embodiment that can be used to implement the method according to the present invention.

Three applications are notably adapted to run on top of the architecture. The application framework has been designed to make it easy for third party developers to write new applications.

The first application simply displays to the user the set of neighbouring devices with their social profile and provides an interface to manage the user's social network (i.e. add and remove friends, change interests).

The user is informed of the presence of a friend or a potential new friend by a set of distinctive rings, vibrations, or indicators/messages displayed on the device's screen.

A potential new friend is currently defined as a friend of a friend or as someone sharing at least one interest in their social profile. This social network management application also provides the bridge between the ad hoc social network stored within the application according to the present invention and an existing online social network such as Facebook (Registered Trademark).

A Facebook plug-in has also been built in order to initialize a user's social profile with realistic social information.

After downloading a user's online social network on the device, their Facebook ID (a value globally unique to Facebook users) is used as their GUID that is defined in the application according to the present invention.

Similarly, Facebook users belong to groups which are represented by fixed and unique GUIDs.

Facebook group GUIDs are used as a simple solution to the complex problem of representing the taxonomy of interest topics.

The second asynchronous messaging application was developed to allow friends to message each other. This application is modelled around a conventional instant messaging application. It displays a contact list containing the user's friends. Selecting a friend opens a window containing previously exchanged messages in chronological order. Users may reply to a discussion thread or create a new message destined to their friends.

Note that these messages can be relayed by intermediate node toward destination given that these intermediates nodes are either friends of the sender or of the destination.

The third epidemic newsgroup application allows discussions among multiple participants, based on a specific topic of interest (e.g. newsgroup). It is best compared to a mobile ad hoc "Usenet" 2. The user interface is similar to the asynchronous messaging application, but the message threads are displayed within the context of a particular interest group, rather than for a particular friend. The common interest is also used as a message forwarding criterion.

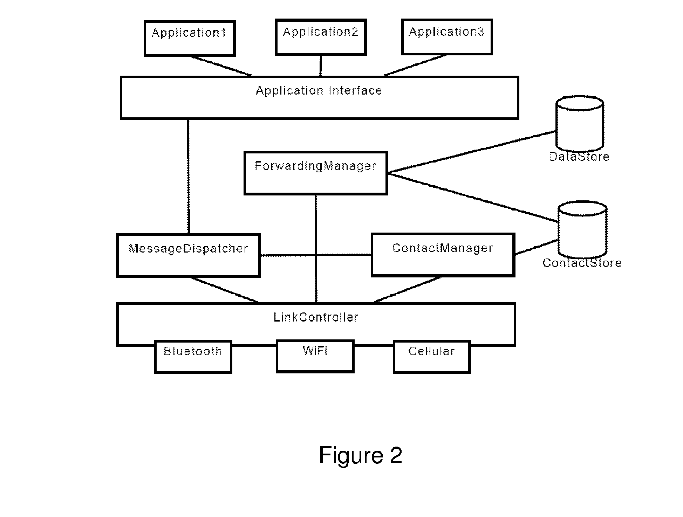

The central components of the architecture of the system according to the present invention are the two databases, one for contacts and social profiles, and one for application data. These two "storage means" are described below. Then, the modules which manage and act upon the data in these "storage means" are discussed. The relationship between the main components of the system is outlined in Figure 2.

The Contact Store provides persistent storage of device contact statistics, including MAC addresses for each device seen, and the user metadata. The user metadata (i.e. the social profile) consists of the user name and some optional details such as an email, a list of friends and a list of interests. The Contact Store maintains relationships between the system-specific GUIDs for users, friends, interests and applications.

Internally, MAC addresses are used to uniquely identify neighbouring devices. The Contact Store can manage a user with multiple devices, or with a device containing multiple-interfaces, by associating the user's GUID with each MAC address. The Contact Store is updated during the metadata update phase.

The Data Store is responsible for storing and providing efficient access to the data entering the system through the Application Interface and data exchanged between devices implementing the application according to the present invention. This store maintains data items, which are autonomous pieces of data. Each data item may have one or more destinations associated with it. The Data Store also stores information about neighbours who have already received a given item, and a TTL (Time To Live) for each item, to prevent redundant transfers.

The Link Controller is the lowest layer in the architecture of the application according to the present invention. The Link Controller provides a common interface for sending and receiving data across a variety of network interfaces. The Link Controller is responsible for periodically scanning for neighbouring devices or access points. This component receives data on any of the available interfaces. The Link Controller provides a common API for all network interfaces that it supports and it hides network technology specifics from the rest of the application.

The Network Message Dispatcher component receives interface agnostic messages from the Link Controller and dispatches them to the proper component in the present architecture, after determining whether a message is a control message or a data message. Data messages are passed to the Application Interface, while control messages are passed to the Contact Manager.

The Contact Manager coordinates the communication and social metadata updates with the neighbouring devices. It uses the Contact Store to persistently store all friends, interests, and other metadata associated with encountered users of the application according to the present invention. The Contact Manager maintains changes to the set of users of the application according to the present invention that are in the current neighborhood, which is used by other components like the Forwarding Manager and applications. The Forwarding Manager matches data to be forwarded with potential destinations or next-hops, using information found in the Contact Store. For each message stored in transit, it makes a decision on what the next hop should be, based on the current state of the neighborhood. It also controls the aging of messages by using a TTL. The Forwarding Manager has been designed to support an arbitrary number of forwarding algorithms; for instance epidemic forwarding within nodes who are friends, friends of friends or share similar interests.

The Application Interface is designed so that developers can easily create new applications that use the application according to the present invention. Each application in the context of the present invention has a unique GUID that it registers with the Application Interface at startup. The application then simply communicates with the system according to the present invention using a loop-back socket. The Application Interface decides how to handle local messages by using the application GUID found in these messages.

The application according to the present invention can for instance, but not exclusively, be implemented in programming language C++, so that it can run on a variety of mobile devices. It can run for instance on Windows Mobile, but by abstracting the operating systems APIs from the core application, it can also run on Symbian and other C++ based platforms.

The above specification, examples and drawings provide a complete description of the method according to the present invention. Since many embodiments of the invention can be made without departing from the spirit and scope of the invention, the invention resides in the claims herein after appended.

## Claims

1. Method of communication in a communication network, using a communication device (D) comprising means for exchanging data with at least another communication device, **characterized in that** it comprises the following steps:
• receiving, at said device (D):
i. information (I) representing interconnections between users of a social networking application ;
ii. information concerning at least one contact between said device (D) and at least another device, occurring in said communication network ;
• determining, upon occurrence of a new contact (NC) between said device (D) and at least another device, based :
• on said information (I) representing interconnections between users of a social networking application and
■ on predetermined rules related to data forwarding;
to transmit data or not to transmit data from said device (D) using said new contact (NC).

2. Method of communication according to claim 1 **characterized in that** it further comprises a step of transmitting data from said device (D) using said new contact (NC).

3. Method of communication according to claim 1 or 2 **characterized in that** it further comprises a step of receiving, at said device (D), information concerning predetermined rules related to data forwarding.

4. Method of communication according to claim 1 or 2 **characterized in that** information concerning predetermined rules related to data forwarding is stored in a memory of said device (D).

5. Method of communication according to one of the preceding claims **characterized in that** it further comprises a step of receiving, at said device (D), information concerning statistics about past contacts between devices.

6. Method of communication according to claim 5, **characterized in that** said statistics about past contacts between devices include the last time a given device has been in contact with another given device.

7. Method of communication according to claim 5 or 6, **characterized in that** said statistics about past contacts between devices include average frequencies of contact between given devices.

8. Method of communication according to one of the preceding claims, **characterized in that** said information (I) representing interconnections between users of a social networking application has the form of a graph (G), each user being associated to a device.

9. Method of communication according to claim 8, **characterized in that**, depending on a source device (s) and a destination device (d), a rule defines a subset of directed pairs of devices ((u) -> (v)) so that contacts occurring for pairs in said subset only are allowed in forwarding path.

10. Method of communication according to claim 9, **characterized in that** said pair of devices ((u) -> (v)) is allowed if and only if device (u) and device (v) are within a predetermined distance (k) in the graph (G).

11. Method of communication according to claim 9, **characterized in that** said pair of devices ((u) -> (v)) is allowed if and only if said device (v) is within a predetermined distance (k) of destination device (d) in the graph (G).

12. Method of communication according to claim 9, **characterized in that** said pair of devices ((u) -> (v)) is allowed if and only Centrality(u) ≤ Centrality(v), the Centrality function measuring the importance of a device (Dc) in the network.

13. Method of communication according to claim 12, **characterized in that** the Centrality function depends on:
• the occurrence of this device (Dc) in shortest paths connecting pairs of other devices ;
and/or
• the mean distance between this device (Dc) and all others devices.

14. Method of communication according to claim 9, **characterized in that** said pair of devices ((u) -> (v)) is allowed if and only the distance from device (v) to destination device (d) in said graph (G) is not bigger than the distance from device (u) to destination device (d) in said graph (G).

15. Method of communication according to claim 9, **characterized in that** said pair of devices ((u) -> (v)) is allowed if and only Degree(u) ≤ Degree(v), the Degree function representing the number of directly connected devices (associated to users) for a given device in said graph (G).

16. Communication device (D) comprising means for exchanging data with at least another communication device in a communication network, **characterized in that** it further comprises means for:
• receiving:
i. information related to a graph (G) representing interconnections between users of a social networking application ;
ii. information concerning at least one contact between said device (D) and at least another device, occurring in said communication network ;
• determining, upon occurrence of a new contact (NC) between said device (D) and at least another device, based on said graph (G) and on predetermined rules related to data forwarding, to forward data or not to forward data from said device (D) using said new contact (NC).
